# EUROPEAN PATENT APPLICATION

(11) **EP 2 566 108 A1**
(43) Date of publication of application: **06.03.2013**
(21) Application number: 12182237.3
(22) Date of filing: 29.08.2012
(51) Int. Cl.: H04L 12/28

(54) **Control server and control method**

(30) Priority: 02.09.2011 JP 2011191380
(71) Applicant: Kabushiki Kaisha Toshiba, Minato-ku, Tokyo 105-8001 (JP); Toshiba Consumer Electronics Holdings Corporation, Tokyo 101-0021 (JP); Toshiba Lighting & Technology Corporation, Yokosuka-shi Kanagawa 237-8510 (JP)
(72) Inventor: Yamamoto, Takayuki, Kanagawa, 237-8510 (JP)
(74) Representative: Bokinge, Ole

(57) **Abstract**

In a control server (1), a storing section (120) accumulates request data received from a terminal (4a) and used for remotely operating, via a control apparatus (2a), a home electric appliance (3) provided in a home. A generating section (113) generates schedule data on the basis of at least one of the request data and the inquiry. The schedule data is data concerning a frequency of an inquiry about the request data by the control apparatus (2a) and data transmitted to the control apparatus (2a). A transmitting section (130) transmits the request data stored in the storing section (120) to the control apparatus (2a) in response to the inquiry transmitted from the control apparatus (2a) at a frequency indicated by the schedule data.

## Description

### FIELD

Embodiments described herein relate generally to a control server and a control method.

### BACKGROUND

A communication protocol such as ECHONET for controlling apparatuses in the home is generally known according to the development of information communication in recent years.

In the ECHONET, a home electric appliance sometimes uploads a state of the home electric appliance itself to a home electric appliance control server (hereinafter sometimes simply referred to as "control server") via a home electric appliance control apparatus (hereinafter sometimes simply referred to as "control apparatus"). For example, if a front door of the home is locked, a control apparatus of the door transmits home electric appliance notification data indicating that the door is locked to the control server. The home electric appliance notification data transmitted from the door is accumulated in the control server. If the control server receives an inquiry about a locking state of the door from a terminal of a user, the control server can return the locking state of the door to the terminal of the user referring to the home electric appliance notification data.

In the ECHONET, a user away from home can remotely control a home electric appliance in the home by giving a control instruction to the home electric appliance in the home via the control server.

Specifically, the user transmits request data for remote control (hereinafter sometimes simply referred to as "request data") from an information terminal such as a cellular phone or a computer to the control server. The control server accumulates the request data. On the other hand, the control apparatus set in the home accesses the control server at predetermined timing and inquires about the request data for the home electric appliance in the home. If the request data is accumulated in the control server, the control server extracts the request data and transmits the request data to the control apparatus present in the home or the like of the user. When the control apparatus receives the request data, the control apparatus controls the home electric appliance on the basis of the request data.

The control apparatus inquires, at timing set in advance, the control server about the request data that the control apparatus should process.

In general, there is a communication control processing apparatus that collects, on the basis of information such as a polling interval and an implementation time set by another apparatus, a state of the other apparatus by polling (see, for example, JP-A-2005-65164 and JP-A-2004-288187). The communication control processing apparatus described in JP-A-2005-65164 sets the polling interval long, for example, if traffic increases and some apparatus cannot perform communication as described in paragraph [0057]. Consequently, the communication control processing apparatus can reduce the traffic and communicate with all target apparatuses. JP-A-2004-288187 discloses that the communication control processing apparatus reduces traffic by performing polling at a time interval corresponding to characteristics of an apparatus.

There is a home electric appliance remote control system that can perform remote control taking into account time when a user can come home (see, for example, JP-A-2010-288231). The home electric appliance remote control system described in JP-A-2010-288231 inquires a user terminal about the location or the like of a user at predetermined timing, determines the predicted time of the user' s return home and an operation start time and operation content of a home electric appliance, and transmits the predicted time of the user's return home and the operation start time and the operation content to a home electric appliance control apparatus. The home electric appliance remote control system determines, on the basis of location information or the like of the user, timing for inquiring about the location of the user next time.

However, both the inventions described in JP-A-2005-65164 and JP-A-2004-288187 set the polling interval long in order to reduce the traffic and do not change the polling interval taking into account convenience of the user. The invention described in JP-A-2010-288231 determines timing for inquiring about the location of the user in order to calculate a returning home timing of the user. Therefore, the control apparatus does not change timing for inquiring the control server.

For example, if the user transmits request data of a home electric appliance to the control server via the user terminal, the request data is quickly processed, whereby convenience of the user is considered to be improved. However, none of the inventions described in the abovementioned patent literatures solves such a problem.

Therefore, there is expectation for development of a technique for changing timing when the control apparatus transmits an inquiry about request data to the control server and improving convenience of the user.

An object to be achieved by the embodiments is to provide a control server and a control method for changing timing when a control apparatus transmits an inquiry about request data to a control server and capable of supporting improvement of convenience of a user.

### DESCRIPTION OF THE DRAWINGS

FIG. 1 is a diagram for explaining a system configuration of a home electric appliance control system and functional blocks of a control server and a control apparatus according to an embodiment;
FIG. 2 is a sequence chart for schematically explaining processing in the home electric appliance control system;
FIG. 3 is a diagram for explaining an example of data structure and data of request data stored by the control server;
FIG. 4 is a diagram for explaining an example of data structure and data of home electric appliance notification data stored by the control server;
FIG. 5 is a diagram for explaining an example of data structure and data of schedule data stored by the control server.
FIGS. 6A and 6B are diagrams for explaining an example of data structure and data of target apparatus data stored by the control server;
FIG. 7 is a flowchart for explaining processing in which a schedule generating section in the control server generates schedule data on the basis of the request data;
FIG. 8 is a flowchart for explaining processing in which the schedule generating section in the control server generates schedule data on the basis of the home electric appliance notification data; and
FIGS. 9A to 9C are diagrams for explaining data when the control server generates schedule data.

### DETAILED DESCRIPTION

In general, according to one embodiment, there is provided a control server and a control method for changing timing when a control apparatus transmits an inquiry about request data to a control server and supporting improvement of convenience of a user.

An embodiment is explained below with reference to the drawings. In the description of the drawings, the same or similar components are denoted by the same or similar reference numerals and signs.

### Home electric appliance control system

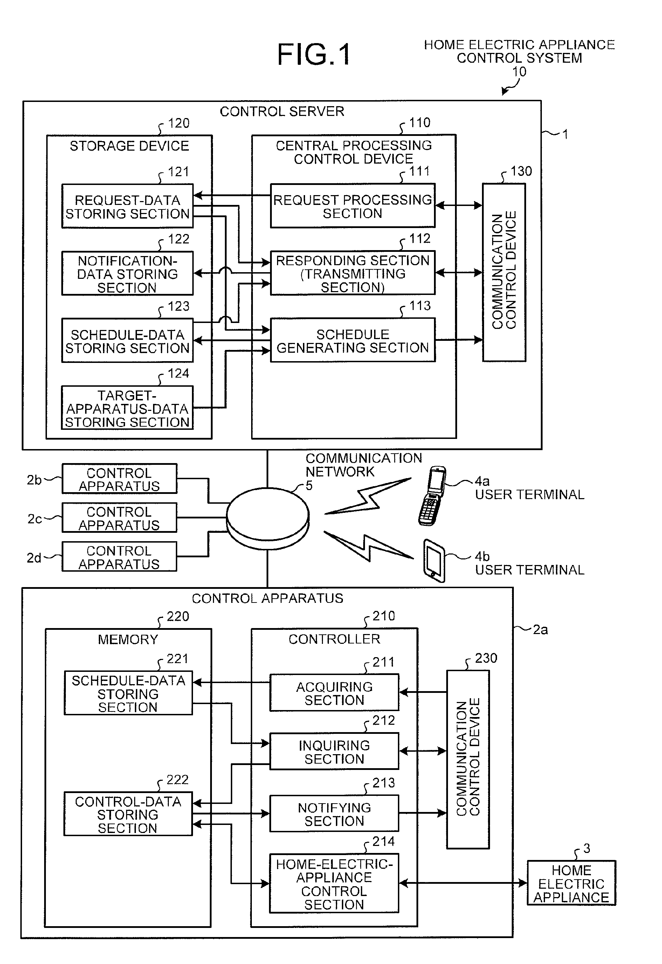

As shown in FIG. 1, a home electric appliance control system 10 according to an embodiment includes a control server 1, control apparatuses 2a, 2b, 2c, and 2d, a home electric appliance 3, and user terminals 4a and 4b. If the control apparatuses 2a, 2b, 2c, and 2d are not specifically distinguished from one another, the control apparatuses 2a, 2b, 2c, and 2d are sometimes simply referred to as control apparatuses 2. Similarly, if the user terminals 4a and 4b are not specifically distinguished from each other, the user terminals 4a and 4b are sometimes simply referred to as user terminals 4.

The control server 1, the control apparatuses 2, and the user terminals 4 are connected to be capable of communicating with one another via a communication network 5. The communication network 5 is a public communication network that can perform mutual communication such as the Internet.

A computer program for executing predetermined processing is installed in a general computer including a storage device 120, a central processing control device 110, and a communication control device 130, whereby the control server 1 is realized. The control server 1 is connected to the communication network 5 via the communication control device 130.

When the control server 1 receives request data from the user terminal 4, the control server 1 stores the request data in a request-data storing section 121 of the storage device 120. When the control server 1 receives, from the control apparatus 2, an inquiry about request data addressed to the control apparatus 2, the control server 1 extracts, from the storage device 120, request data 121a addressed to the control apparatus 2 and transmits the request data 121a to the control apparatus 2. The control apparatus 2 controls the home electric appliance 3 according to the received request data. When the control server 1 receives home electric appliance notification data 122a transmitted from the control apparatus 2, the control server 1 accumulates the home electric appliance notification data 122a in a notification-data storing section 122 of the storage device 120.

The request data 121a is data for the user terminal 4 to remotely operate the home electric appliance 3 in a home of a user of the user terminal 4. For example, the request data 121a includes data such as an identifier of the user, an identifier of the control apparatus 2 corresponding to the identifier of the user, a type of a control target home electric appliance, and an operation type for control. The operation type is data for, for example, "setting a start time for an air conditioner to 19:00 and setting temperature of the air conditioner to 28 degrees" and "checking locking of a door" in the user's home.

The control server 1 according to this embodiment generates schedule data 123a for inquiry indicating, in particular, timing when the control apparatus 2 inquires about request data. The control server 1 transmits the generated schedule data 123a to the control apparatus 2. The control apparatus 2 inquires, on the basis of the received schedule data, the control server 1 about request data addressed to the control apparatus 2.

The home electric appliance notification data 122a is data such as a state of the home electric appliance 3 is notified from the control apparatus 2 to the control server 1. For example, the home electric appliance notification data 122a includes data such as an identifier of the user, an identifier of the control apparatus 2 corresponding to the identifier of the user, a type of a control target home electric appliance, and notification content for notification. The notification content is data indicating, for example, that "power consumption is xxxx" and "a door is locked" in the user's home.

The user terminal 4 is an information apparatus used by the user, for example, a cellular phone, a smart phone, or a personal computer. For example, a browser is installed in the user terminal 4. When the user terminal 4 is connected to the control server 1, a screen for inputting request data is displayed on the user terminal 4. The user inputs an identifier of the user, an identifier of the control apparatus 2 corresponding to the identifier of the user, a type of a control target home electric appliance, operation content for control, and the like to this screen. The user terminal 4 transmits the various data input by the user to the control server 1 as request data.

The control apparatus 2 is set in the user's home to control the home electric appliance 3 in the user's home. The control apparatus 2 is a general information apparatus including a controller 210, a memory 220, and a communication control device 230. The control apparatus 2 is connected to the communication network 5 via the communication control device 230.

In particular, the control apparatus 2 inquires the control server 1 about the request data 121a at a predetermined inquiry frequency and acquires the request data 121a. The control apparatus 2 acquires the request data 121a from the control server 1. The control apparatus 2 inquires the control server 1 about request data at a frequency designated by the request data 121a.

When the control apparatus 2 receives the request data from the control server 1, the control apparatus 2 controls the home electric appliance 3 in the user's home according to the received request data. The control apparatus 2 acquires a state of the home electric appliance 3 in the user's home at predetermined timing and transmits home electric appliance notification data concerning the home electric appliance 3 in the user's home to the control server 1.

The home electric appliance 3 is an electric appliance set in a home or the like. The home electric appliance 3 is, for example, an air conditioner, an electric lock, or an intercom.

In an example shown in FIG. 1, the home electric appliance control system 10 includes two user terminals 4 and four control apparatuses 2. However, the number of user terminals 4 and the number of control apparatuses 2 are not limited to these numbers. Plural home electric appliances 3 may be connected to the control apparatuses 2.

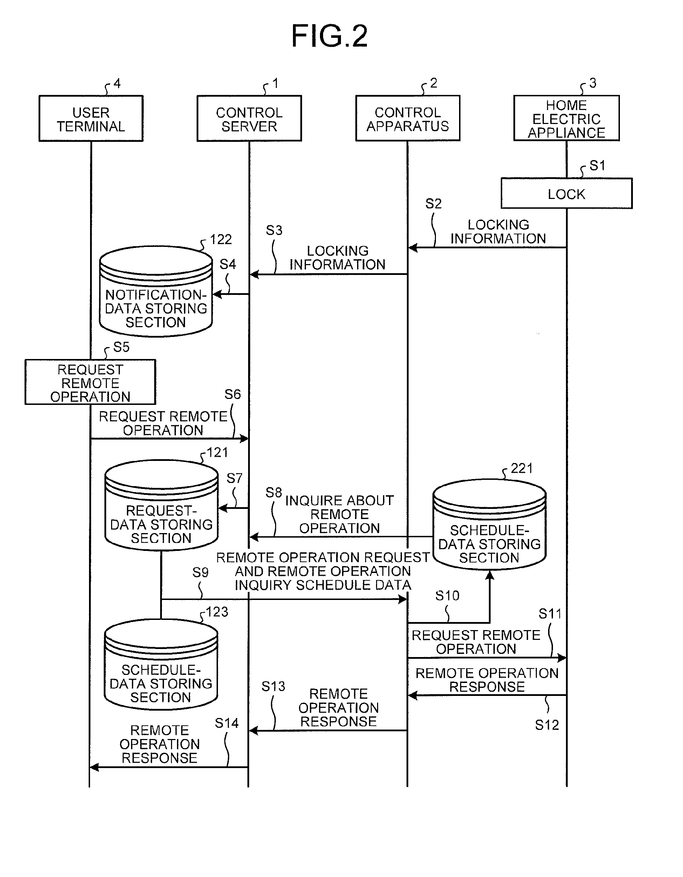

Processing of the home electric appliance system according to this embodiment is schematically explained with reference to FIG. 2. The home electric appliance 3 shown in FIG. 2 is a front door. The example explained below is a case when the user leaves the home and locks the front door.

First, in step S1, the home electric appliance 3 detects that the user locks the front door. In step S2, the home electric appliance 3 transmits the detection of the locking of the front door to the control apparatus 2. In step S3, the control apparatus 2 transmits the detection of the locking of the front door to the control server 1 as home electric appliance notification data. In step S4, the control server 1 stores the received home electric appliance notification data in the notification-data storing section 122.

On the other hand, in step S5, data for requesting remote operation is input in the user terminal 4. In step S6, the user terminal 4 transmits request data to the control server 1. In step S7, the control server 1 stores the received request data in the request-data storing section 121. The control server 1 stands by for an inquiry about the request data from the control apparatus 2.

The control apparatus 2 inquires, referring to the schedule data 123a, the control server 1 about the request data for the remote operation at timing set in the schedule data 123a. The schedule data 123a is data generated by the control server 1 and transmitted from the control server 1 to the control apparatus 2 as explained below.

When the control server 1 receives the remote operation inquiry from the control apparatus 2, the control server 1 reads out data in the request-data storing section 121 and acquires request data that should be transmitted to the control apparatus 2. Further, the control server 1 acquires the schedule data 123a according to necessity. In step S9, the control server 1 transmits the acquired request data and the schedule data 123a to the control apparatus 2.

In step S9, the control apparatus 2 receives the schedule data 123a. In step S10, the control apparatus 2 stores the schedule data 123a received in step S10 in a schedule-data storing section 123 of the memory 220. At this point, old schedule data stored in advance may be overwritten with the schedule data 123a stored anew. In the next and subsequent times, the control apparatus 2 inquires the control server 1 about request data on the basis of the schedule data 123a received anew.

In step S11, the control apparatus 2 requests, on the basis of the request data received in step S9, the home electric appliance 3 to perform remote operation. In step S12, the control apparatus 2 receives a remote operation response corresponding to the remote operation request to the home electric appliance 3 in step S11. In step S13, the control apparatus 2 transmits, to the control server 1, a remote operation response corresponding to the remote operation request to the home electric appliance 3 in step S9. In step S14, the control server 1 transmits, to the user terminal 4, a remote operation response corresponding to the remote operation request to the home electric appliance 3 in step S6.

### Control server

The control server 1 is explained in detail with reference to FIG. 1.

A home electric appliance control program is stored in the storage device 120 of the control server 1. The storage device 120 includes the request-data storing section 121, the notification-data storing section 122, the schedule-data storing section 123, and a target-apparatus-data storing section 124. The central processing control device 110 includes a request processing section 111, a responding section 112, and a schedule generating section 113. The home electric appliance control program is read out to the central processing control device 110 and executed, whereby the request processing section 111, the responding section 112, and the schedule generating section 113 are realized.

The request-data storing section 121 is a storage area where request data 121a, 121b, and the like are stored in the storage device 120. In this embodiment, the request data 121a, 121b, and the like are transmitted from the user terminal 4. The request data 121a, 121b, and the like are data for remotely operating the home electric appliance 3 provided in the user's home and is data referred to in order to generate the schedule data 123a. In this embodiment, arbitrary request data stored in the request-data storing section 121 is sometimes referred to as "request data 121a".

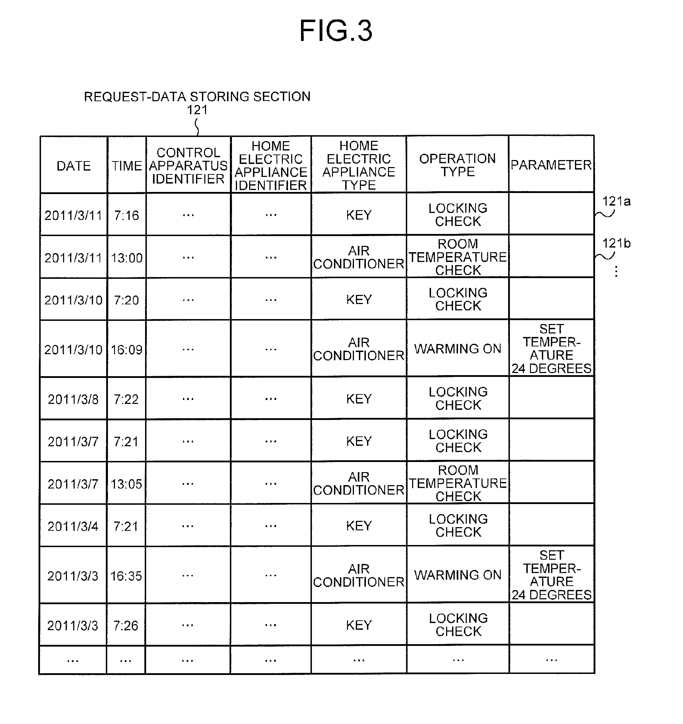

As shown in FIG. 3, the request data 121a, 121b, and the like are stored in the request-data storing section 121. The request data 121a, 121b, and the like include data such as reception date and time when the request data are received from the user terminal 4, a control apparatus identifier of a control apparatus that is requested to perform remote operation, a home electric appliance identifier, a home electric appliance type, an operation type, and necessary parameters. The request data 121a, 121b, and the like are uniquely set using the date and time, the control apparatus identifier, the home electric appliance identifier, and the operation type as keys. The parameters are necessary depending on items of the operation type.

In an example shown in FIG. 3, the request data 121a is data for checking, from a place where the user is visiting, whether a key is locked. The request data 121b is data for causing, from the place where the user is visiting, the air conditioner to operate at a set temperature of 24 degrees.

The notification-data storing section 122 is a storage area where home electric appliance notification data 122a, 122b, and the like are stored in the storage device 120. In this embodiment, the home electric appliance notification data 122a, 122b, and the like are data transmitted from the control apparatus 2. The home electric appliance notification data 122a, 122b, and the like are data for notifying a state of the home electric appliance 3 provided in the user's home and is data referred to in order to generate the schedule data 123a. In this embodiment, arbitrary home electric appliance notification data stored in the notification-data storing section 122 is sometimes referred to as "home electric appliance notification data 122a".

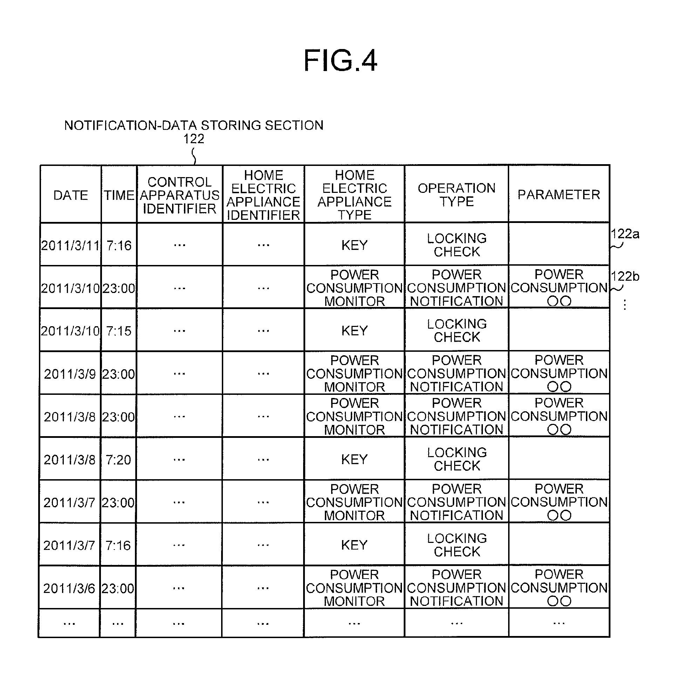

As shown in FIG. 4, the home electric appliance notification data 122a, 122b, and the like are stored in the notification-data storing section 122. The home electric appliance notification data 122a, 122b, and the like include data such as reception date and time when the home electric appliance notification data are received from the control apparatus, a control apparatus identifier of a control apparatus that notifies the home electric appliance notification data, a home electric appliance identifier of a home electric appliance to be notified, a home electric appliance type, a notification type, and parameters. The home electric appliance notification data 122a, 122b, and the like are uniquely set using the date and time, the home electric appliance control identifier, the home electric appliance identifier, and the notification type as keys. The parameters are necessary depending on items of the notification content.

In an example shown in FIG. 4, the home electric appliance notification data 122a is data for notifying that the key is locked. The home electric appliance notification data 122b is data for notifying power consumption measured by a power consumption monitor.

The schedule-data storing section 123 is a storage area where schedule data 123a, 123b, and the like are stored in the storage device 120. The schedule data 123a, 123b, and the like are generated for each of the control apparatuses 2. In this embodiment, arbitrary schedule data stored in the schedule-data storing section 123 is sometimes referred to as "schedule data 123a".

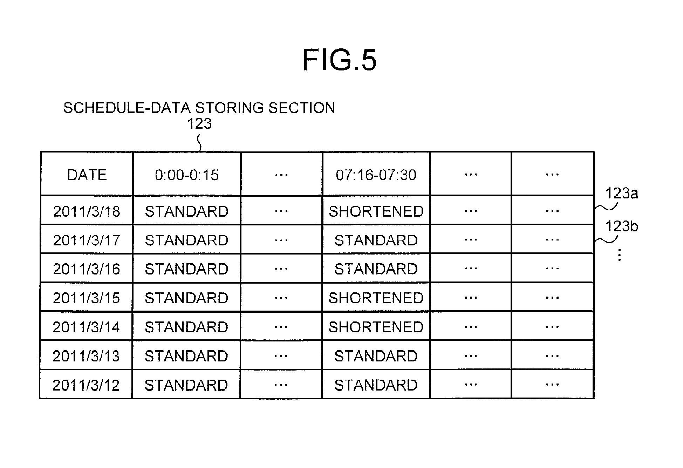

The schedule data 123a is data in which a frequency at which the control apparatus 2 inquires the control server 1 about request data is associated for each predetermined time. In the schedule data 123a shown in FIG. 5, the frequency of inquiry and a period of time set at an interval of 15 minutes are associated with each other. In an example shown in FIG. 5, the data of the inquiry frequency is "standard" or "shortened". For example, "standard" indicates that the control apparatus 2 inquires the control server 1 about inquiry data once in 5 minutes and "shortened" indicates that the control apparatus 2 inquires the control server 1 about inquiry data once in 3 minutes.

In the example shown in FIG. 5, the frequency is associated using a future date and a period of time at an interval of 15 minutes as keys. However, the schedule data 123a does not have to be this form. For example, if a life cycle of the user is a cycle of work from Monday to Friday and day-off on Saturday and Sunday, in the schedule data 123a, the frequency may be associated for each interval of 15 minutes concerning each of "weekday" of Monday to Friday and "holiday" of Saturday and Sunday. As the frequency, "standard" or "shortened" is associated. However, if a frequency at which the control apparatus 2 inquires the control server 1 about request data is known, expressions other than "standard" and "shortened" may be used. For example, it is also conceivable that data such as "5 minutes" and "3 minutes" are set as the inquiry interval.

The target-apparatus-data storing section 124 is a storage area where target apparatus data 124a and 124b are stored in the storage device 120. The target apparatus data 124a is used when the schedule data 123a is generated from request data. On the other hand, the target apparatus data 124b is used when the schedule data 123a is generated from home electric appliance notification data. The control server 1 according to this embodiment generates the schedule data 123a including a frequency at which the control apparatus 2 inquires about the request data 121a. Therefore, information concerning a home electric appliance for which the user is assumed to request remote operation, operation content of the remote operation request, a notification type of home electric appliance notification related to the remote operation request, and the like are set in the target apparatus data 124a and 124b.

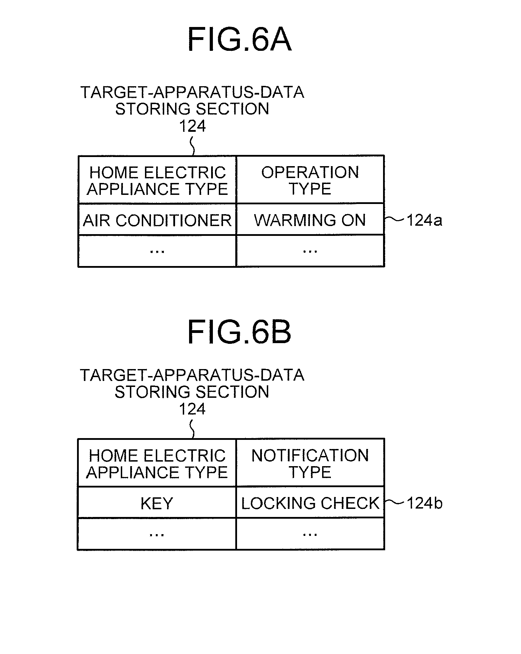

The target apparatus data 124a includes a home electric appliance type for which request data is aggregated and an operation type of the request data, based on which the schedule data 123a are generated. The target apparatus data 124a is data shown in FIG. 6A. In the target apparatus data 124a, a home electric appliance type "air conditioner" and an operation type "heating ON" are associated as items for which request data is aggregated. In this case, the schedule data 123a is generated from request data concerning heating ON of the air conditioner.

The home electric appliance type and the operation type set in the target apparatus data 124a are, for example, a home electric appliance for which remote operation is requested to be quickly performed and a type of the remote operation. The schedule data 123a is efficiently generated by aggregating, from the request-data storing section 121, request data related to the home electric appliance type and the operation type specified by the target apparatus data 124a. Consequently, the control server 1 can set an inquiry frequency of request data by the control apparatus 2 to be high at timing when the home electric appliance and the remote operation set in the target apparatus data 124a frequently appear.

The target apparatus data 124b includes a home electric appliance type for which home electric appliance notification data is aggregated and a notification type of home electric appliance notification, based on which the schedule data 123a is generated. The target apparatus data 124b is data shown in FIG. 6B. In the target apparatus data 124b, a home electric appliance type "key" and a notification type "locking check" are associated as items for which home electric appliance notification data is aggregated. In this case, the schedule data 123a is generated from home electric appliance notification data concerning locking check for the key.

The home electric appliance type and the notification type set in the target apparatus data 124b are, for example, a home electric appliance and a notification type related to a home electric appliance for which remote operation is requested by the user and a type of the operation. The schedule data 123a is efficiently generated by aggregating, from the notification-data storing section 122, the home electric appliance notification data 122a related to the home electric appliance type and the notification type specified by the target apparatus data 124b.

For example, power consumption notified from the power consumption monitor is data transmitted to the control server 1 to be recorded. The power consumption is hardly remotely controlled by the user. On the other hand, it is conceivable that the user checks a locking state of the key after his/her going out. Therefore, it is assumed that, after the control apparatus 2 notifies a locking check to the control server 1 after the user locks the key, the user requests remote operation in order to grasp a locking state of the key.

Therefore, a home electric appliance type of a home electric appliance for which remote operation can be requested and a notification type for the home electric appliance are set in the target apparatus data 124b. Consequently, the control server 1 can set an inquiry frequency of request data by the control apparatus 2 to be high at timing when the home electric appliance and the notification set in the target apparatus data 124b frequently appear.

When the request processing section 111 receives request data from the user terminal 4, the request processing section 111 accumulates the request data in the request-data storing section 121. The request processing section 111 transmits a processing result corresponding to a remote operation request to the user terminal 4.

When the responding section 112 receives an inquiry about request data from the control apparatus 2, the responding section 112 searches through the request-data storing section 121 and retrieves request data that should be transmitted to the control apparatus 2. If there is request data that should be transmitted to the control apparatus 2, the responding section 112 transmits the request data to the control apparatus 2. At this point, the responding section (a transmitting section) 112 transmits the schedule data 123a for the control apparatus 2 as well.

Although the responding section 112 transmits the schedule data 123a to the control apparatus 2 in this explanation, transmitting means (not shown) may transmit the schedule data 123a to the control apparatus 2 in non-synchronization with transmission of a response to a remote operation inquiry. For example, when the control server 1 transmits data to the control apparatus 2 as well as the remote operation inquiry, the control server 1 may transmit the schedule data 123a together with the data.

The schedule generating section 113 generates the schedule data 123a on the basis of the data stored in the request-data storing section 121 and/or the notification-data storing section 122 and stores the schedule data 123a in the storage device 120.

If the schedule generating section 113 generates the schedule data 123a from the data of the request-data storing section 121, the schedule generating section 113 reads out the data of the request-data storing section 121 and aggregates the number of received request data for each calculation target unit. If the number is larger than a predetermined number, the schedule generating section 113 generates the schedule data 123a in which an inquiry frequency in the calculation target unit is set short.

If the schedule generating section 113 generates the schedule data 123a from the data of the notification-data storing section 122, the schedule generating section 113 reads out the data of the notification-data storing section 122 and aggregates the number of received home electric appliance notification data for each calculation target unit. If the number is larger than a predetermined number, the schedule generating section 113 generates the schedule data 123a in which an inquiry frequency in the calculation target unit is set short. The schedule generating section 113 may generate the schedule data 123a from both the data of the request-data storing section 121 and the data of the notification-data storing section 122.

The "calculation target unit" is a unit of time for setting a frequency of a remote operation inquiry to "standard", "shortened", and the like. In the example shown in FIG. 5, the calculation target unit is time obtained by dividing one day at an interval of 15 minutes. Besides, as the calculation target unit, for example, time obtained by dividing each of weekday and holiday at an interval of 20 minutes and time obtained by dividing the same day in the last year at an interval of 10 minutes are conceivable.

If a target apparatus and an operation type for which the request data 121a, 121b, and the like are aggregated are set in the target apparatus data 124a, the schedule generating section 113 extracts data of a home electric appliance type and an operation type to be aggregated included in the target apparatus data 124a from the request data 121a, 121b, and the like and generates the schedule data 123a.

Similarly, if a target apparatus and a notification type for which the home electric appliance notification data 122a, 122b, and the like are aggregated are set in the target apparatus data 124b, the schedule generating section 113 extracts data of a home electric appliance type and a notification type to be aggregated included in the target apparatus data 124b from the home electric appliance notification data 122a, 122b, and the like and generates the schedule data 123a.

The schedule generating section 113 may generate the schedule data 123a on the basis of only the request data 121a, 121b, and the like or may generate the schedule data 123a on the basis of only the home electric appliance notification data 122a, 122b, and the like. The schedule generating section 113 may generate the schedule data 123a on the basis of the request data 121a, 121b, and the like and the home electric appliance notification data 122a, 122b, and the like.

The schedule generating section 113 stores the generated schedule data 123a in the schedule-data storing section 123 of the storage device 120.

If the schedule generating section 113 generates a schedule of the next day, the schedule generating section 113 generates the schedule data 123a in which an interval for the control apparatus 2 inquiring the control server 1 about request data is shortened before and after time when a remote operation request is received in the past.

For example, the schedule generating section 113 extracts, from data of the request-data storing section 121 in the past within a period designated in advance, a time when a remote operation request is generated. The schedule generating section 113 generates a schedule for inquiring the control server 1 about request data at a shorter time interval than a default time interval before and after the time when the remote operation request is generated.

The same applies when the schedule generating section 113 generates the schedule data 123a on the basis of home electric appliance data. If the schedule generating section 113 generates a schedule of the next day, the schedule generating section 113 generates the schedule data 123a in which an interval for the control apparatus 2 inquiring the control server 1 about request data is shortened before and after time when a home electric appliance notification is received in the past.

For example, the schedule generating section 113 extracts, from data of the notification-data storing section 122 in the past within a period designated in advance, a time when a home electric appliance notification is received. The schedule generating section 113 generates a schedule for inquiring the control server 1 about request data at a shorter time interval than a default time interval before and after the time when the home electric appliance notification is received.

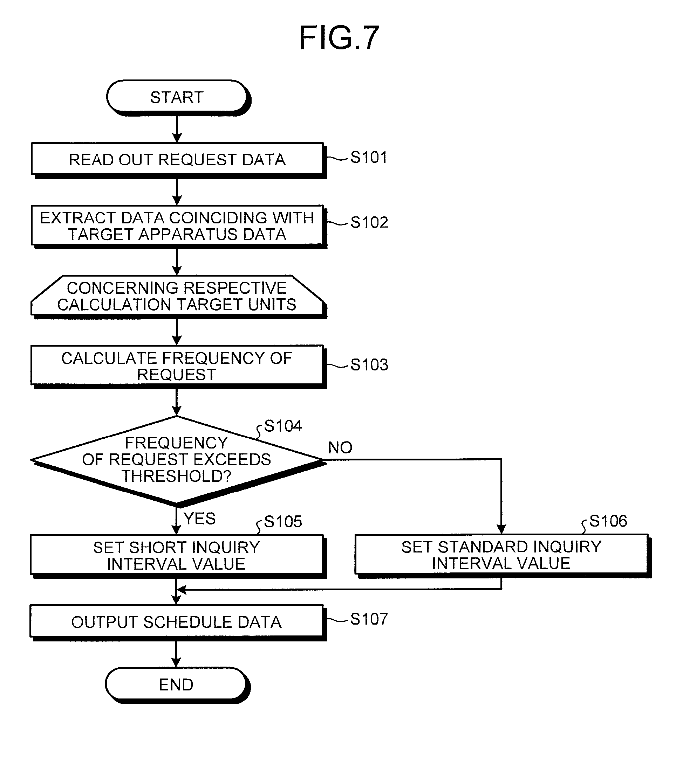

A flow of remote operation inquiry schedule generation processing by the schedule generating section 113 is explained with reference to FIG. 7. In an example shown in FIG. 7, the schedule data 123a is generated from the request data 121a, 121b, and the like.

First, in step S101, the schedule generating section 113 reads out the request data 121a, 121b, and the like from the request-data storing section 121 of the storage device 120. If the schedule generating section 113 generates the schedule data 123a concerning a predetermined control apparatus 2, the schedule generating section 113 extracts request data associated with an identifier of the predetermined control apparatus 2. In step S102, the schedule generating section 113 further extracts request data that coincides with the target apparatus data 124a.

Further, in step S103, the schedule generating section 123 acquires data in an aggregation target period on the basis of a reception time of the request data extracted in step S102. The aggregation target is, for example, data set as a reference in outputting schedule data such as "data received in nearest one month" or "data received in the same period in the last year".

Subsequently, the schedule generating section 113 repeats the processing from steps S103 to S105 concerning respective calculation target units. Specifically, in step S103, the schedule generating section 113 further aggregates, on the basis of reception times of extracted request data, the number of request data received at time of a predetermined calculation target unit and calculates a frequency of requests.

In step S104, the schedule generating section 113 determines whether the frequency of requests calculated in step S103 exceeds a threshold. The threshold is set in advance. If the frequency of requests exceeds the threshold, in step S105, the schedule generating section 113 sets a value of a short inquiry interval concerning the relevant calculation target unit. The schedule generating section 113 sets the frequency in the calculation target units as "shortened". On the other hand, if the frequency of requests does not exceed the threshold, in step S106, the schedule generating section 113 sets a value of a standard inquiry interval concerning the calculation target unit.

If the processing in steps S103 to S106 ends concerning all the calculation target units, in step S107, the schedule generating section 113 outputs the schedule data 123a with the inquiry interval value set in step S105 or S106 and an identifier of the calculation target unit associated with each other.

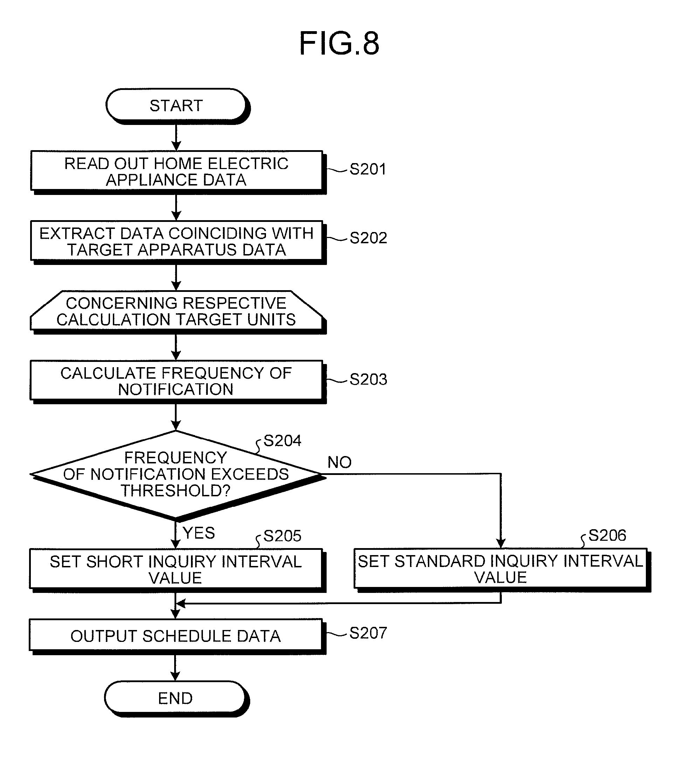

In FIG. 7, the schedule generating section 113 outputs the schedule data 123a on the basis of the frequency of the request data 121a, 121b, and the like. However, if the schedule generating section 113 outputs the schedule data 123a on the basis of the frequency of the home electric appliance notification data 122a, 122b, and the like, processing is performed in the same manner as shown in FIG. 8. If the schedule generating section 113 outputs the schedule data 123a on the basis of the frequency of the request data 121a, 121b, and the like and the frequency of the home electric appliance notification data 122a, 122b, and the like, processing is performed in the same manner as the processing shown in FIGS. 7 and 8.

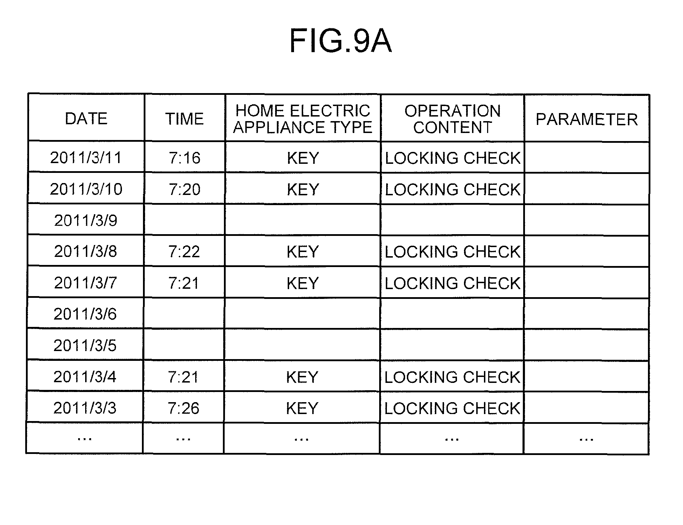

A specific example in which the schedule generating section 113 outputs the schedule data 123a on the basis of the frequency of the request data 121a, 121b, and the like is explained with reference to FIGS. 9A to 9C. In the example shown in FIGS. 9A to 9C, as a schedule of inquiry on and after March 12, 2011, the schedule generating section 113 calculates an inquiry frequency from 7:15 to 7:30 on the respective days of the week on the basis of request data for locking check of the key for n weeks and generates the schedule data 123a.

FIG. 9A is an example of the request data 121a, 121b, and the like stored in the request-data storing section 121. The schedule generating section 113 extracts request data concerning locking check of the key received in an aggregation target period among received request data addressed to a predetermined control apparatus 2.

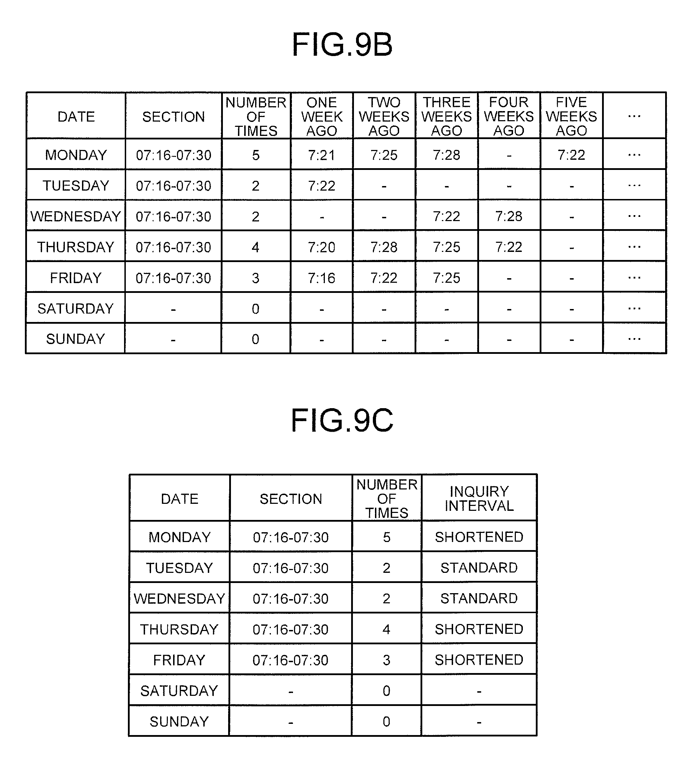

The schedule generating section 113 counts the number of request data received on each day of the week and at every 15 minutes. FIG. 9B shows the number of request data received on each day of the week and at every 15 minutes. FIG. 9B indicates that, concerning Monday, remote operation requests for locking check were received at 7:21 one week ago, at 7:25 two weeks ago, at 7:28 three weeks ago, at 7:22 five weeks ago, and the like and inquiries were received five times in n weeks. No inquiry was generated four weeks ago.

The schedule generating section 113 counts, on the basis of the request data for locking check of the key for the n weeks, the number of request data received from 7:15 to 7:30 on each day of the week. As a result, it is seen that remote operation requests for locking check of the key were received between 7:15 and 7:30 five times on Monday, twice on Tuesday and Wednesday, four times on Thursday, and three times on Friday and no remote operation request was received on Saturday and Sunday.

When a threshold is set to "3", the remote operation requests for locking check of the key were frequently generated between 7:15 and 7:30 on Monday, Thursday, and Friday. Therefore, as shown in FIG. 9C, the schedule generating section 113 outputs a schedule for shortening an inquiry interval for remote operation between 7:15 and 7:30 on Monday, Thursday, and Friday. The schedule generating section 113 counts the number of generated remote operation requests concerning all the calculation target units and generates the schedule data 123a. According to this schedule, an inquiry frequency of request data from the control apparatus 2 to the control server 1 is high between 7: 15 and 7:30 on Monday, Thursday, and Friday.

The control server 1 can control, taking into account a behavior pattern of the user, the control apparatus 2 to frequently inquire the control server 1 about request data in a period of time when it is highly likely that the user transmits a remote operation request. Consequently, the control server 1 can have the control apparatus 2 quickly download request data received from the user terminal 4. The control server 1 can quickly process the remote operation request of the user and inform the user terminal 4 of a processing result of the remote operation request. Since the inquiry frequency is not changed in a period of time when request data is rarely transmitted from the user terminal 4, it is possible to reduce a load on the control server 1.

The threshold may be determined according to the number of control apparatuses 2 controlled by the control server 1. For example, if the control server 1 controls a large number of control apparatuses and a load on the control server 1 is expected, the threshold is set rather high. Consequently, it is possible to reduce a load on the control server 1 while increasing an inquiry frequency of the control apparatuses 2 in a period of time when request data is likely to be transmitted from the user terminal 4.

The schedule generating section 113 may generate the schedule data 123a taking into account weather information and the like. For example, if a temperature rise is large, it is conceivable that the user transmits remote operation for turning on cooling of the air conditioner at time when the user returns home. Therefore, the schedule generating section 113 may generate the schedule data 123a such that, when temperature rises, the inquiry frequency of the control apparatus 2 increases in a period of time near the time when the user returns home.

### Control apparatus

The control apparatus 2 is explained in detail with reference to FIG. 1.

A home electric appliance control program is stored in the memory 220 of the control apparatus 2. The memory 220 includes a schedule-data storing section 221 and a control-data storing section 222. The controller 210 includes an acquiring section 211, an inquiring section 212, a notifying section 213, and a home-electric-appliance control section 214. The home electric appliance control program is read out to the controller 210 and executed, whereby the acquiring section 211, the inquiring section 212, the notifying section 213, and the home-electric-appliance control section 214 are realized. A computer program for realizing the control apparatus 2 may be so-called firmware. Various means realized in the controller 210 may be realized by a circuit program rather than software.

The schedule-data storing section 221 is a storage area where schedule data 221a is stored in the memory 220. The schedule data 221a is data transmitted from the control server 1. The schedule data 221a has an example of a data structure and data same as those of the schedule data 123a shown in FIG. 5. The control apparatus 2 inquires the control server 1 about request data at a frequency specified by the schedule data 221a.

The control-data storing section 222 is a storage area where control data 222a for controlling the home electric appliance 3 is stored in the memory 220. The control data 222a includes request data acquired from the control server 1, data of a result of operation based on the request data, and home electric appliance notification data transmitted to the control server 1.

The acquiring section 211 receives the schedule data 221a from the control server 1 and stores the schedule data 221a in the schedule-data storing section 221. If old schedule data is stored already, the acquiring section 211 overwrites the old schedule data with data acquired anew.

The inquiring section 212 inquires the control server 1 about request data in the calculation target unit and at the frequency of the schedule data 221a. The inquiring section 212 inquires, at the frequency specified by the schedule data 221a, the control server 1 whether request data acquired by the control apparatus 2 is present. If request data acquired by the control apparatus 2 is present, the inquiring section 212 acquires the request data and stores the request data in the control-data storing section 222. In the example shown in FIG. 5, "shortened" is associated from 7:16 to 7:30 a.m. on March 18, 2011. In this period of time, the inquiring section 212 inquires the control server 1 about request data at a frequency higher than a normal inquiry frequency. For example, whereas the inquiring section 212 usually inquires the control server 1 about request data at every 10 minutes, in this period of time, the inquiring section 212 inquires the control server 1 about request data at every 5 minutes.

When the inquiring section 212 receives request data, the inquiring section 212 causes the home-electric-appliance control section 214 to control the home electric appliance 3 on the basis of the data and acquires a result of the control. When the inquiring section 212 acquires the result corresponding to the request data, the inquiring section 212 transmits the result to the control server 1.

The notifying section 213 transmits a state of the home electric appliance 3 to the control server 1 at predetermined timing. The notifying section 213 acquires the state of the home electric appliance 3 via the home-electric-appliance control section 214. For example, the notifying section 213 notifies the control server 1 of the state of the home electric appliance 3 at timing when the front door is locked. The notifying section 213 acquires power consumption in one day and transmits the power consumption to the control server 1 at a set time every day.

The home-electric-appliance control section 214 controls the home electric appliance 3 on the basis of the control data 222a and acquires a result of the control. For example, if request data is stored in the control-data storing section 222, the home-electric-appliance control section 214 operates the home electric appliance 3 on the basis of the request data and acquires a result of the control. For example, in the case of request data for checking locking of the key, the home-electric-appliance control section 214 acquires a locking state of the key, which is the home electric appliance 3, and stores the locking state in the control-data storing section 222. In the case of request data for turning on warming at a set temperature of 24 degrees, the home-electric-appliance control section 214 causes warming of the air conditioner, which is the home electric appliance 3, to operate at the set temperature of 24 degrees. If the warming normally operates, the home-electric-appliance control section 214 stores a result of the operation in the control-data storing section 222.

As explained above, with the home electric appliance control system 10 according to this embodiment, it is possible to change timing when the control apparatus 2 transmits an inquiry about request data to the control server 1 and support improvement of convenience of the user.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

## Claims

1. A control server (1) comprising:
a storing section (120) configured to store request data received from a terminal (4a) and used for operating, via a control apparatus (2a), an electric appliance (3);
a processing section (113) configured to generate schedule data that designates a frequency of inquiries the control apparatus should make about the request data; and
a transmitting section (130) configured to transmit the stored request data to the control apparatus (2a) in response to an inquiry transmitted by the control apparatus (2a) at the frequency designated in the schedule data.

2. The server (1) according to claim 1, wherein the processing section (113) generates the schedule data based on a number of times of the request data is received over a certain period of time.

3. The server (1) according to claim 2, wherein the frequency designated in the schedule data is higher if the number of times the request data is received over the certain period of time is equal to or larger than a threshold than if the number of times the request data is received over the certain period of time is smaller than the threshold.

4. The server (1) according to claim 3, wherein the threshold is determined according to a number of control apparatuses (2a) for which the schedule data is being generated.

5. The server (1) according to claim 1, wherein the processing section (113) generates the schedule data based on a number of times of notification data about the electric appliance (3) is received from the control apparatus (2a) over a certain period of time.

6. The server (1) according to claim 5, wherein the frequency designated in the schedule data is higher if the number of times the notification data is received over the certain period of time is equal to or larger than a threshold than if the number of times the notification data is received over the certain period of time is smaller than the threshold.

7. The server (1) according to claim 6, wherein the threshold is determined according to a number of control apparatuses (2a) for which the schedule data is being generated.

8. The server (1) according to claim 1, wherein the processing section (113) generates the schedule data based on a number of times the request data is received over a certain period of time and a number of times notification data about the electric appliance (3) is received from the control apparatus (2a) over a certain period of time.

9. The server (1) according to claim 1, wherein the processing section adjusts the frequency designated in the schedule data based on weather information.

10. The server (1) according to claim 1, wherein
the request data includes an electric appliance type and an operation type of the electric appliance (3),
the storing section (120) further stores target apparatus data including an electric appliance type and an operation type for which the number of times the request data is received over a certain period of time is stored, and
the processing section (113) extracts, from the request data, the target apparatus data of the electric appliance type and the operation type for which the number of times the request data is received over a certain period of time has been stored, and generates the schedule data from the target apparatus data.

11. A control method for an electric appliance (3), comprising:
storing at a control server request data received from a terminal (4a) and used for operating, via a control apparatus (2a), the electric appliance (3);
generating at the control server schedule data that designates a frequency of inquires the control apparatus (2a) should make about the request data; and
transmitting the stored request data to the control apparatus (2a) in response to an inquiry transmitted by the control apparatus (2a) at the frequency designated in the schedule data.

12. The control method according to claim 11, wherein the schedule data is generated based on a number of times of the request data is received over a certain period of time.

13. The control method according to claim 12, wherein the frequency designated in the schedule data is higher if the number of times the request data is received over the certain period of time is equal to or larger than a threshold than if the number of times the request data is received over the certain period of time is smaller than the threshold.

14. The control method according to claim 13, wherein the threshold is determined according to a number of control apparatuses (2a) for which the schedule data is being generated.

15. The control method according to claim 11, further comprising:
receiving at the control server notification data about the electric appliance (3) which is transmitted by the control apparatus (2a).
